# EUROPÄISCHE PATENTANMELDUNG

(11) **EP 2 071 594 A1**
(43) Veröffentlichungstag der Anmeldung: **17.06.2009**
(21) Anmeldenummer: 08021599.9
(22) Anmeldetag: 12.12.2008
(51) Int. Cl.: H01F 3/08, H01F 7/06, H01F 41/02, F16D 27/10

(54) **Vorrichtung mit einem Elektromagneten, Kupplung und Verfahren zur Herstellung eines Elektromagneten**

(30) Priorität: 14.12.2007 DE 102007060895
(71) Anmelder: Linnig Trucktec GmbH, 88677 Markdorf (DE)
(72) Erfinder: Krafft, Rainer Dr., 88633 Heiligenberg (DE)
(74) Vertreter: Eisele, Otten, Roth & Dobler

(57) **Zusammenfassung**

Die Erfindung betrifft eine Vorrichtung mit einem Elektromagneten (13), bestehend aus einer Spule (14) und Magnetfeld-Leitmittel (15), welche die Spule (14) zumindest teilweise umgeben. Erfindungsgemäß ist die Spule (14) mit einer gespritzten bzw. gegossenen Ummantelung versehen, wobei die Magnetfeld-Leitmittel (15) aus einem Material gebildet sind, das ferromagnetische Metallpartikel und Kunststoffmaterial umfasst. Die Erfindung betrifft außerdem eine Kupplung mit einer solchen Vorrichtung und ein Verfahren zur Herstellung eines Elektromagneten (13).

## Beschreibung

### Stand der Technik

Vorrichtungen mit einem Elektromagneten, der eine Spule und Magnetfeld-Leitmittel umfasst, welche die Spule zumindest teilweise umgeben, werden für unterschiedliche technische Anwendungen genutzt. Beispielsweise in der Kraftfahrzeugtechnik werden Kupplungsanordnungen, welche einen Elektromagneten umfassen, eingesetzt, die im Hinblick auf die technische Funktion und die Realisierung bzw. Herstellung ständig höheren Anforderungen genügen müssen bzw. zu optimieren sind. Gleichzeitig sind betriebswirtschaftliche Aspekte zu berücksichtigen.

### Aufgabe und Vorteile der Erfindung

Aufgabe der vorliegenden Erfindung ist es, Vorrichtungen mit einem Elektromagneten insbesondere Kupplungen mit einem Elektromagneten bzw. Verfahren zur Herstellung von Elektromagneten unter technischen und wirtschaftlichen Gesichtspunkten zu verbessern.

Diese Aufgabe wird durch die Ansprüche 1, 2, 7 und 8 gelöst.

In den abhängigen Ansprüchen sind vorteilhafte Weiterbildungen der Erfindung aufgezeigt.

Die Erfindung geht zunächst aus von einer Vorrichtung mit einem Elektromagneten, bestehend aus einer Spule und Magnetfeld-Leitmittel, welche die Spule zumindest teilweise umgeben. Solche Vorrichtungen können z.B. Bauteile in beliebigen Anordnungen mit einem Elektromagneten sein. Ein wesentlicher Aspekt der Erfindung liegt darin, dass die Magnetfeld-Leitmittel aus einem Material gebildet sind, das ferromagnetische Metallpartikel und Kunststoffmaterial umfasst. Die erfindungsgemäße Materialkombination für die Herstellung der Magnetfeld-Leitmittel, macht es möglich sowohl technische Eigenschaften eines Elektromagneten als auch die Herstellung der Vorrichtung mit einem Elektromagneten zu optimieren bzw. vorteilhaft weiterzuentwickeln. Die erfindungsgemäße Materialauswahl für die Magnetfeld-Leitmittel eröffnet unterschiedliche bzw. völlig neue Möglichkeiten bei der Herstellung von Elektromagneten. Insbesondere lassen sich moderne Herstellungsprozesse nutzen und entsprechend hochwertige Produkte realisieren.

Für bekannte Elektromagnete werden seit jeher im Wesentlichen z.B. aus Stahlrohlingen gefertigt Bauteile verwendet, welche aus Sägematerial, Schmiedematerial oder einem Gussmaterial entstanden sind. Durch spanende Bearbeitung erfolgt die Weiterverarbeitung der Stahlrohlinge. Daran ist insbesondere nachteilig, dass komplexe Herstellungsschritte bzw. entsprechende Bearbeitungsmaschinen erforderlich sind und ein nicht zu vermeidender Materialabfall bzw. ein Mehraufwand zum Sammeln bzw. Rückführen des Materialabfalls entsteht.

Dieses Vorgehen macht zudem weitere Arbeitsschritte notwendig. In dem durch die spanende Bearbeitung hergestellten Bauteil, der im Wesentlichen die Magnetfeld-Leitmittel bzw. ein Spulengehäuse bildet, wird dann eine Spule, beispielsweise eine Kupferspule, eingebracht und mit einem Isolationsmaterial umgeben insbesondere in dem Metallgehäuse vergossen. Damit das Isolationsmaterial z.B. ein Kunststoffisolator in die auszufüllenden Räume gelangen kann, muss dieser fließfähig bleiben, was einen Mindestabstand zwischen Abschnitten der Spule und dem Bauteil bzw. dem Spulengehäuse von mehreren Millimetern, mindestens aber von einem Millimeter notwendig macht.

Die Gesamtherstellung des Elektromagneten ist vergleichsweise kompliziert und teuer. Außerdem steht bei einem vorgegebenen Einbauraum für die Spule nur ein Teil davon bzw. ein reduzierter Raum für die Ausbildung des von der stromdurchflossenen Spule erzeugten Magnetfeldes zur Verfügung. Denn der vom Isolationsmaterial ausgefüllte Raum verringert den magnetischen Wirkungsgrad des Elektromagneten.

Vergleichbare Nachteile sind auch bei einer zum oben genannten Vorgehen alternativen Herstellung nicht zu umgehen. Dabei wird das metallische Bauteil bzw. werden die Magnetfeld-Leitmittel durch einen Umformprozess eines Blechteils hergestellt. Auch hierfür sind für die Einbringung des Isolators bzw. eines Isolationsmaterials entsprechende Abstände zwischen der Spule und angrenzenden Abschnitten des Blechformteils zwingend erforderlich. Auch müssen bei der Verwendung von Blechteilen, einzelne Blechteile in der Regel durch entsprechende Verbindungsverfahren miteinander verbunden werden.

Durch die vorgeschlagene Verwendung von ferromagnetischen Metallpartikeln im Gemisch mit einem Kunststoffmaterial zur Bildung der Magnetfeld-Leitmittel können die Magnetfeld-Leitmittel insbesondere in einem Guss- bzw. Spritzgussverfahren gebildet werden. Damit lassen sich vorteilhaft z.B. ohne Weiteres verschiedenste Formgebungen realisieren.

Insbesondere kann ein bisher üblicher Materialabfall vermieden werden. Außerdem kann gegenüber dem Stand der Technik eine vergleichsweise höhere magnetische Wirkkraft erzeugt werden, bei einem vergleichbaren vorgegebenen Einbauraum, aufgrund dessen, dass ein Abstand zwischen der Spule und den Magnetfeld-Leitmitteln ganz oder nahezu ganz entfällt, womit keine entsprechende Schwächung des Magnetfeldes bzw. der mit dem Elektromagneten aufbringbare Magnetkraft auftritt. Gegebenenfalls kann zwischen der Spule und dem Material aus den Magnetfeld-Leitmittel eine relativ dünne Zwischenschicht für eine elektrische Isolation der Spule z.B. eine dünne Ummantelung aus z.B. einer Folie oder eine Beschichtung der Spule vorgesehen sein.

Insbesondere können die Magnetfeld-Leitmittel durch Spritzguss um die Spule angeordnet werden, so dass diese unmittelbar bis an die Spule heranreichen bzw. angrenzend sind. Insbesondere ist es vorteilhaft, wenn die durch die ferromagnetischen Metallpartikel und das Kunststoffmaterial gebildete Eigenschaften für die Magnetfeld-Leitmittel im gesamten oder nahezu gesamten zur Verfügung stehenden Bereich angrenzend an die Spule bis zu einer Außenabmessung des Elektromagneten ausgebildet ist. Insbesondere sind damit die von dem vorgeschlagenen Materialgemisch für die Magnetfeld-Leitmittel erzielten Eigenschaften durchgängig bzw. ohne Unterbrechung über einen maximal zur Verfügung stehenden Abschnitt ausgestaltet, da dieser Raum von dem Materialgemisch insbesondere vollständig ausgefüllt ist.

Die Magnetfeld-Leitmittel umfassen z.B. in dem Kunststoffmaterial verteilte Metallpartikel. Die Magnetfeld-Leitmittel sind also unter physikalisch-chemischen Gesichtspunkten als ein heterogenes Gemisch aus Metallpartikeln und einem Kunststoffmaterial anzusehen, die jeweils in abgegrenzten Phasen vorliegen. Ein Zusatz von weiteren Begleitkomponenten in geringeren Anteilen ist nicht ausgeschlossen.

Die Spule ist bevorzugt eingebettet in den Magnetfeld-Leitmitteln, welche insbesondere wesentliche Abschnitte außen um die Spule bilden. Insbesondere ist die Spule zwischen Magnetfeld-Leitmitteln positioniert oder teilschalenartig von den Magnetfeld-Leitmitteln umgeben. Die Spule selbst kann zum Beispiel ringförmig geschlossen zu einer Achse ausgebildet sein, wobei im Schnitt, der durch einen Längsschnitt durch die Achse definiert ist, die Spule etwa vier- bzw. rechteckige Außenform mit vier Außenseiten zeigt. Bei Verwendung in einer elektromagnetischen Kupplung bleibt in der Regel eine der vier Außenseiten der Spule frei von den Magnetfeld-Leitmitteln. Die freibleibende Außenseite des Spulenrings ist mit ihrer flächigen Seite insbesondere axial zur Achse ausgerichtet und kann von magnetisch nicht leitfähigem Material überdeckt sein bzw. materialfrei bleiben. Anders ausgedrückt sind in dem betrachteten Fall die Magnetfeld-Leitmittel insbesondere durchgängig an zwei gegenüberliegenden Außenseiten der Spule und an zumindest einer weiteren Außenseite vorhanden, die zwischen den gegenüberliegenden Außenseiten liegt.

Die Spule kann von den Magnetfeld-Leitmitteln derart umgeben sein, dass bei Bestromung der Spule im gesamten Volumen der Magnetfeld-Leitmittel eine effektive Magnetfeldausbildung erfolgt. Die Magnetfeld-Leitmittel sind insbesondere einstückig bzw. durch einen zusammenhängenden Materialbereich gebildet.

Die Dicke der Magnetfeld-Leitmittel, also deren Materialstärke senkrecht zur Außenseite der Spule, ist insbesondere durchgehend gleich bzw. in vergleichbarer Größenordnung. Die Dicke der Magnetfeld-Leitmittel entspricht insbesondere etwa einer halben Breite der Spule in der betrachteten senkrechten Richtung zur Spulen-Außenseite, gegebenenfalls auch dem zweifachen Wert oder mehr. Außenseitig kann die Spule selbst ggf. von einer vergleichsweise sehr dünnen Isolierung z.B. Isolierschicht umgeben sein.

Im Schnitt können die Magnetfeld-Leitmittel die Spule zum Beispiel U-förmig bzw. kanalartig umgeben, wobei die U-Form zwei gegenüberliegende Schenkel und einen diese verbindenden Zwischenschenkel umfasst. Eine Außenseite der Spule, welche durch die offene Seite der U-förmigen Magnetfeld-Leitmittel von diesen frei bleibt, kann zurückversetzt zu stirnseitigen Bereichen der beiden Schenkel der U-förmigen Magnetfeld-Leitmittel bleiben.

Die betrachtete Spule mit den Magnetfeld-Leitmitteln kann insbesondere Teil eines Elektromagneten in einer elektromagnetischen Kupplung mit zueinender beim Kupplungsvorgang in Kontakt bringbaren Reibflächen sein, z.B. in einer Reibschaltkupplung.

Insbesondere kann die Zusammensetzung des Materials aus ferromagnetischen Metallpartikeln und dem Kunststoffmaterial dem jeweiligen Anwendungsfall entsprechend optimiert werden. Zum Beispiel kann das Metall, aus dem die Metallpartikel sind, in Bezug auf die magnetische Leitfähigkeit, Oberflächenhärte, Steifigkeit, Festigkeit und dergleichen variiert werden bzw. das Kunststoffmaterial z.B. im Hinblick auf die Temperaturbeständigkeit, Festigkeit, Fließfähigkeit.

Ein weiterer wesentlicher Aspekt liegt darin, dass die Magnetfeld-Leitmittel aus einem auf der Basis von Metallpartikel hergestellten Material mit ferromagnetischen Eigenschaften bestehen, das bei der Herstellung fließ- bzw. spritzfähig ist. Insbesondere kann das vorgeschlagene Material dadurch mit bewährten Verfahren wie z.B. Guss-, Spritz- bzw. Spritzgussverfahren in Form gebracht bzw. mit anderen Bauelementen kombiniert werden. Damit kann besonders einfach jede mögliche Form der Magnetfeld-Leitmittel auch in geometrisch bzw. räumlich schwierigen Verhältnissen ausgebildet werden. Insbesondere kann das Material fließ- bzw. spritzfähig gemacht werden, indem neben dem Metallanteil vergleichsweise geringe Mengen zumindest eines weiteren Materials bzw. einer Zusatzkomponente vorgesehen werden. So kann die Spule mit einer gespritzten bzw. gegossenen Ummantelung versehen werden, welche die Magnetfeld-Leitmittel bildet und wie ein Kunststoffteil hergestellt bzw. verarbeitet werden können, was vorteilhaft ist bzw. das Spritzgießen z.B. bei Temperaturen von ca. 200 Grad Celsius ermöglicht, insbesondere bei kleiner 200 Grad Celsius, die sich jedoch im fertiggestellten Zustand, nach der Aushärtung des geschmolzenen und eingespritzten Materials auf der Basis von Metallpartikel wie ein Metallteil mit ferromagnetischen Eigenschaften verhalten bzw. für die betreffende Anwendung vorteilhafte Werkstoffeigenschaften zeigen insbesondere thermisch und mechanisch hochstabil sind.

Besonders vorteilhaft ist außerdem, dass insbesondere in einem weiteren Arbeits- bzw. Spritzgussvorgang weitere Bereiche der Spule bzw. der Magnetfeld-Leitmittel umgossen werden können, beispielsweise um eine Deckschicht zu bilden, die auch nicht metallisch bzw. ferromagnetisch sein kann, oder Anbauteile an dem zuvor gebildeten Guss- bzw. Spritzgussbauteil auszubilden, beispielsweise Versteifungsteile, Anbauelemente, Lagereinheiten oder Teile, welche die Anbringung von Kabelhaltern ermöglichen.

Das Spritzgussverfahren kann insbesondere bei Temperaturen des geschmolzenen Materials von ca. 200°C insbesondere von kleiner 200 Grad Celsius, z.B. insbesondere 160 Grad Celsius erfolgen.

Es wird weiter vorgeschlagen, dass die Magnetfeld-Leitmittel aus einem Material gebildet sind, das ferromagnetische Metallpartikel mit einem Anteil von über 80 Masseprozent insbesondere ca. 95 Masseprozent aufweist. Prinzipiell sind auch Anteile von noch weniger als 80 Masseprozent der ferromagnetischen Metallpartikel möglich. Es hat sich jedoch herausgestellt, dass insbesondere bei einem Anteil von über 90 Masseprozent der ferromagnetischen Metallpartikel mit einem weiteren Material, insbesondere Kunststoffmaterial, ein im Hinblick auf technische Vorgaben für den Elektromagneten optimales Ergebnis erzielt werden kann.

Es ist außerdem vorteilhaft, dass die Magnetfeld-Leitmittel aus einem Material gebildet sind, das ein Kunststoffmaterial mit einem Anteil von bis zu 20 Masseprozent, insbesondere ca. 5 bis 7 Masseprozent, aufweist. Mit diesem deutlich geringeren Anteil des Kunststoffmaterials im Vergleich zu dem zumindest einen anderen Material, insbesondere zum Metallpartikelanteil, kann eine optimierte Herstellung bzw. ideale Materialeigenschaften der Magnetfeld-Leitmittel erzielt werden.

In einer vorteilhaften Ausbildung der erfindungsgemäßen Vorrichtung sind die Magnetfeld-Leitmittel vollständig als Spritzgussbauteil ausgebildet. Damit lässt sich die Herstellung der Vorrichtung mit einem Elektromagneten bzw. des Elektromagneten selbst vereinfachen und effektiver gestalten.

Weiter ist es vorteilhaft, dass die Magnetfeld-Leitmittel ein vorfabriziertes Gehäuseteil umfassen, insbesondere aus einem umgeformten Stahlkörper, beispielsweise aus einem Formblech, an dem die Spule positionierbar ist. Damit kann alternativ zu vollständig spritzgegossenen Magnetfeld-Leitmittel ein vergleichsweise dünnwandiges Gehäuseteil verwendet werden, was in Einzelfällen gewünscht bzw. vorteilhaft sein kann. Die Spule kann z.B. an dem vorfabrizierten Gehäuseteil eingesetzt und beispielsweise durch Vergießen mit dem Material auf Basis ferromagnetischer Metallpartikel fixiert werden.

Gegenüber bisherigen Elektromagneten können nun z.B. Formteile aus Stahl bzw. Stahlblech verwendet werden, die relativ dünnwandig bzw. aus Blech mit geringer Blechdicke geformt sind, wodurch kleine Umformradien möglich sind. Dies ermöglicht insbesondere eine verbesserte Bauraumausnutzung. Außerdem können vergleichsweise preisgünstige Umformwerkzeuge zur Bereitstellung des dünnwandigen Stahlkörpers verwendet werden.

Anschließend kann die Spule in einen Bereich zwischen Abschnitten des dünnwandigen Stahlkörpers an der gewünschten Einbaustelle positioniert werden. Die dabei verbleibenden Zwischenräumen zwischen der Spule und dem Stahlkörper können mit dem Material auf Basis ferromagnetischer Metallpartikel, in der Regel mit einem Anteil an Kunststoffmaterial, aufgefüllt bzw. die Spule zumindest teilweise umgossen werden, insbesondere durch ein Spritzgussverfahren.

Ein weiterer wesentlicher Aspekt der Erfindung betrifft eine Kupplung, insbesondere für ein Kraftfahrzeug, beispielsweise eine einstufige oder mehrstufige Kupplung zum Antrieb von Zusatzaggregaten wie beispielsweise ein Lüfterrad. Die Kupplung weist erfindungsgemäß eine der vorgenannten Vorrichtungen auf. Damit können Kupplungen, insbesondere elektromagnetisch betätigbare Kupplungen in Kraftfahrzeugen realisiert werden, welche die oben genannten Vorteile aufweisen. Diese Kupplungen weisen insbesondere ringförmige spritzgegossene Magnetfeld-Leitmittel auf, in denen eingegossen eine Spule z.B. Kupferspule untergebracht ist.

Des Weiteren betrifft die Erfindung ein Verfahren zur Herstellung eines Elektromagneten mit einer Spule und Magnetfeld-Leitmittel, welche die Spule zumindest teilweise umgeben. Das Herstellungsverfahren zeichnet sich dadurch aus, dass die Magnetfeld-Leitmittel mit einem Spritzgussvorgang ausgebildet werden. Damit kann technisch vorteilhaft die Herstellung der Magnetfeld-Leitmittel erfolgen. Insbesondere können unterschiedliche Materialeigenschaften durch eine geeignete Auswahl- bzw. Zusammensetzung des für das Spritzgießen verwendete Material gewählt werden. Das Ausgangsmaterial für das Spritzgießen besteht insbesondere aus zwei Komponenten, einer metallischen und einer nicht metallischen Komponente. Insbesondere ist das Material aus einer wie oben erläuterten Mischung gebildet, insbesondere auf Basis von ferromagnetischen Metallpartikeln mit einer Beimischung eines Kunststoffes insbesondere eines Thermoplasten.

Mit einem Spritzgussvorgang lassen sich vergleichsweise komplexe Formgebungen der Magnetfeld-Leitmittel vorteilhaft erzielen. Eine solche Formgebung bei durch Umformung bzw. durch ein spanendes Verfahren aus Metallrohlingen hergestellten Magnetfeld-Leitmittel wäre deutlich aufwändiger bzw. nur unwirtschaftlich zu realisieren. Insbesondere kann ein Materialabfall völlig oder nahezu vollständig vermieden werden. Des Weiteren können mit dem vorgeschlagenen Vorgehen unterschiedliche Materialmischungen, die zur Ausbildung von quasi Metallteilen führt, effektiv und variabel mit dem Spritzgießen verarbeitet werden, was eine schnelle und flexible Anpassung an verschiedene Anwendungsfälle zulässt.

Vorteilhafterweise werden die Magnetfeld-Leitmittel durch ein Umspritzen von zumindest Teilen der Spule ausgebildet. Die Spule wird z.B. in eine Form eingebracht, welche die Außengeometrie der anschließend spritzgegossenen Magnetfeld-Leitmittel bestimmt und dann die freibleibende Bereiche in der Form mit dem aufgeschmolzenen Material ausgegossen. Nach dem Erstarren bzw. Aushärten des Materials ist die Elektromagnetanordnung größtenteils fertiggestellt. Die optimale Raumnutzung wird erzielt, indem das Material beim Umgießen bis unmittelbar an die Spule selbst heranreicht. Gegenüber bisherigen Anordnungen kann bei gleichen Platzverhältnissen die Spule und/oder können die Magnetfeld-Leitmittel größer dimensioniert werden. Unter den Magnetfeld-Leitmitteln werden insbesondere die Elemente in dem Elektromagneten bzw. um die Spule herum verstanden, die eine vergleichsweise sehr hohe bis höchste magnetische Leitfähigkeit aufweisen. Gegebenenfalls lassen sich mit dem Spritzgießen auch ohne Weiteres Abschnitte im Elektromagneten bzw. an der Spule ausbilden, die von den Magnetfeld-Leitmittel frei bleiben. So kann beispielsweise bei einer im Querschnitt rechteckförmigen Spule eine der vier Außenseiten vom vorgeschlagenen Material frei bleiben bzw. anschließend mit einem magnetisch isolierenden bzw. schlecht magnetisch leitfähigem Material versehen werden.

Schließlich wird weiter vorgeschlagen, dass die Spule in einem Bereich zwischen Abschnitten eines Gehäuseteils der Magnetfeld-Leitmittel eingebracht wird und anschließend spritzgussfähiges Material in Freiräume zwischen der Spule und den Abschnitten des Gehäuseteils eingebracht wird. So kann das Verfahren auch dann vorteilhaft genutzt werden, wenn die Magnetfeld-Leitmittel nicht komplett aus dem spritzgegossenen Material bestehen sollen oder die Magnetfeld-Leitmittel angrenzend an ein benachbartes Teil angeformt werden sollen. Zum Beispiel können die Magnetfeld-Leitmittel eine Anordnung umfassen, die neben dem durch Spritzgießen erstellten Teil ein weiteres Element aufweisen, das als Gehäuseteil z.B. zu einem Gehäuse des Elektromagneten gehörend, realisiert werden soll. So kann beispielsweise ein Umformkörper beispielsweise ein dünnwandiger Stahlkörper aus Blech verwendet werden, der einen Teil eines Metallgehäuses des Elektromagneten bilden kann, jedoch auch als Magnetfeld-Leitmittel dient und sehr hohe magnetische Leitfähigkeit besitzt, was beispielsweise aus Stabilitätsgründen bzw. aus konstruktiven Gründen vorteilhaft sein kann.

### Figurenbeschreibung

In den Figuren ist der Stand der Technik und die Erfindung erläutert, zu der anhand von stark schematisierten erfindungsgemäßen Ausführungsbeispielen weitere Merkmale und Vorteile näher erläutert sind. Im Einzelnen zeigt:
- Figur 1: einen Schnitt durch eine schematisiert dargestellte bekannte Vorrichtung mit einem Elektromagneten,
- Figur 2: eine weitere schematisierte Vorrichtung mit einem Elektromagneten nach dem Stand der Technik,
- Figur 3: einen Schnitt durch einen teilweise und schematisch dargestellten erfindungsgemäßen Elektromagneten,
- Figur 4: eine perspektivische Ansicht schräg von unten auf eine zu Figur 3 ähnliche Anordnung und
- Figur 5: eine weitere Schnittansicht durch einen schematisierten Elektromagneten gemäß der Erfindung.

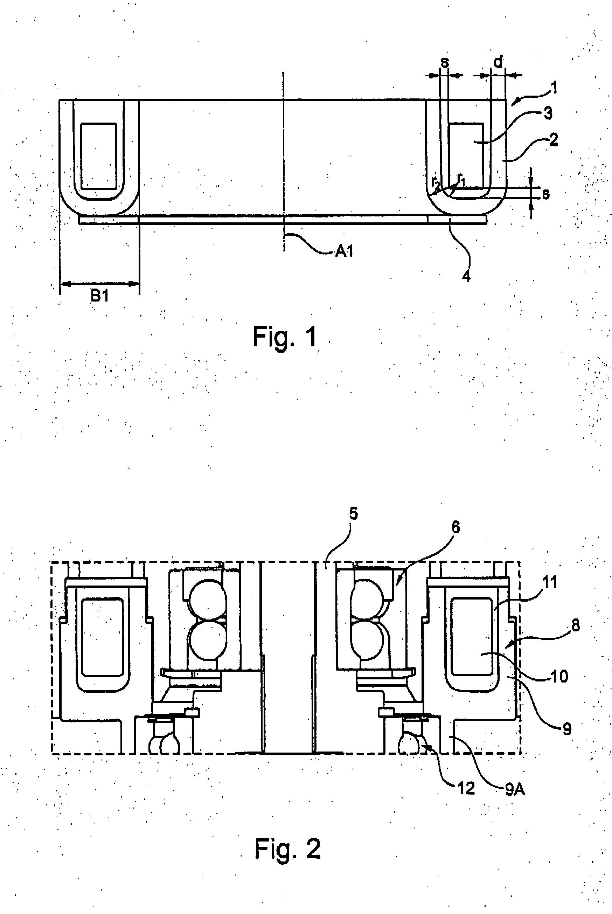

In den Figuren 1 und 2 ist eine isolierende Vergussmasse, in welcher die jeweiligen Spulen des Elektromagneten eingebettet sind, zur besseren Darstellung nicht gezeigt.

Figur 1 zeigt schematisiert einen Schnitt durch einen bekannten ringförmigen Elektromagneten 1, bei dem zur vereinfachten Darstellung einzelne Teile bzw. Details nicht dargestellt sind. Der Elektromagnet 1 umfasst einen aus einem Blechmaterial umgeformten U-förmigen Stahlkörper 2. Der Stahlkörper 2 ist ringförmig geschlossen und dient zur Unterbringung eines ebenfalls ringförmigen Spulenkörpers 3, der nur schematisch mit rechteckförmigen Querschnitt gezeigt ist. Außerdem ist in Figur 1 ein Flanschring 4 gezeigt, der beispielsweise zur Anbringung des Elektromagneten 1 an benachbarte Bauteile dienen kann. Der Flanschring 4 ist am Verbindungsteil zwischen den freien Schenkeln des U-förmigen Stahlkörpers 2 angebracht.

Die Blechdicke d des Stahlkörpers 2 aus ferromagnetischem Material kann beispielsweise mehrere Millimeter betragen, hier ca. 5 mm, wobei das Blechmaterial um den Spulenkörper 3 Magnetfeld-Leitmittel bildet. In radialer Richtung steht umfänglich um eine zentrale Achse A1 des Elektromagneten 1 ein Einbauraum B1 zur Verfügung. Der Spulenkörper 3 ist mit einem in etwa gleichen Spaltabstand s von ca. 2 - 3 mm zu jeweiligen Abschnitten der Innenwandung des U-förmigen Stahlkörpers 2 beabstandet. Dieser Spaltbereich kann nicht beliebig klein gewählt werden bzw. muss mindestens 1 mm betragen, um nach der Einbringung des Spulenkörpers 3 zwischen den Schenkeln des Stahlkörpers 2 mit einer Vergussmasse aus isolierendem Material vergossen werden zu können, um die Spule elektrisch zu isolieren. Ein Mindest-Spaltabstand von z.B. 2 bis 3 mm darf nicht unterschritten werden, damit ein Fließen bzw. vollständiges Ausfüllen des Spaltbereichs mit dem Isolationsmaterial sicher erfolgen kann.

Außerdem sind in Figur 1 die Umformradien r1 und r2 im umgebogenen Bereich des Stahlkörpers 2 zu erkennen. Bei vorgegebenem Einbauraum B1 steht für den Spulenkörper 3 bzw. den Stahlkörper 2 mit der Blechdicke d und den davon abhängigen Radien r1 und r2, aufgrund des einzuhaltenden Spaltabstand s nur ein begrenzter bzw. beengter Einbauraum für den Spulenkörper 3 zwischen den beiden Schenkeln des Stahlkörpers 2 zur Verfügung. Dadurch kann nur eine technisch begrenzte bzw. vergleichsweise reduzierte magnetische Wirkkraft des bestromten Elektromagneten gegenüber einem theoretisch möglichen Wert ohne einen Spaltabstand s realisiert werden.

Figur 2 zeigt eine bekannte Anordnung im Ausschnitt stark schematisiert mit einem alternativen Elektromagneten 8, wobei auch hier, aus den gleichen Gründen wie zu Figur 1 erläutert, nur eine reduzierte magnetische Wirkkraft realisierbar ist. Die Vorrichtung, bei welcher der Elektromagnet 8 umfänglich um eine hohle Welle 5 angeordnet ist, umfasst radial innen zum Elektromagneten 8 positioniert eine Kugellageranordnung 6, auf deren Außenring ein Hülsenabschnitt 7 abgestützt ist. Der Elektromagnet 8 umfasst einen U-förmigen Magnetkörper 9, der z.B. aus einem ferromagnetischen Stahlrohling durch ein spanabhebendes Verfahren hergestellt ist. Im U-förmigen Ausschnitt des Magnetkörprs 9 ist eine Spule 10 untergebracht.

Weitere Bauteile in Figur 2 sind stark schematisiert bzw. einzelne Bauteile sind nicht oder nur teilweise gezeigt.

Zwischen der Spule 10 und Innenwandungsabschnitten des Magnetkörpers 9 ist ein Zwischenbereich 11 vorhanden, in dem eine nicht gezeigte Vergussmasse für eine elektrische Isolation der Spule 10 gegenüber dem Magnetkörper 9 aufgenommen ist. Ein am Magnetkörper 9 sich in Figur 2 nach unten axial erstreckender Abschnitt 9a des Magnetkörpers 9 ist über ein weiteres Kugellager 12 gegenüber der Welle 5 gelagert.

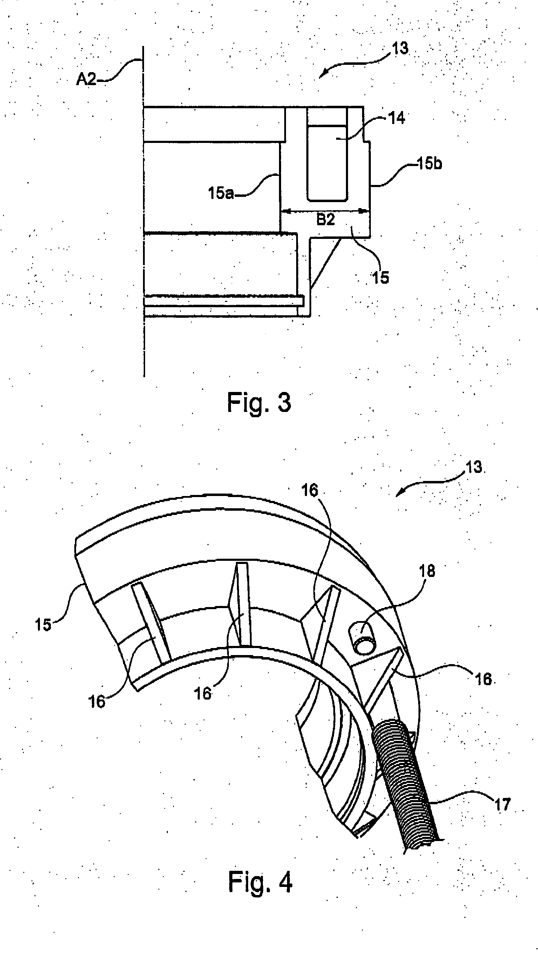

Figur 3 zeigt einen Schnitt durch einen teilweise gezeigten Elektromagneten 13 einer erfindungsgemäßen Vorrichtung. Der Elektromagnet 13 umfasst Magnetfeld-Leitmittel, die in einem Spritzgussvorgang hergestellt sind, hier als Magnetfeld-Leitelement 15 ausgestaltet, das um eine wiederum stark schematisiert gezeigte im Schnitt rechteckige Spule 14 angeordnet ist. Die Spule 14 ist vom Leitelement 15 umgossen bzw. mit diesem fest verbunden, indem die Spule 14 mit drei ihrer vier Außenseiten mit dem umspritzten Material nach dessen Aushärtung in Klebekontakt ist.

Insbesondere kann erfindungsgemäß für den Elektromagneten 13 in einem vorgegebenen zu einer Achse A2 in radialer Richtung betrachtet zur Verfügung stehender Einbauraum B2 zwischen radial innen und außen liegenden Wandungen 15a und 15 b gemäß Figur 3, die Spule 14 vollständig bzw. ununterbrochen und durchgängig von dem Magnetfeld-Leitelement 15 umgeben untergebracht sein. Das Magnetfeld-Leitelement 15 besteht aus einem vergleichsweise magnetisch stark leitfähigem Material, das insbesondere in einem Spritzgussverfahren um die Spule 14 herum angespritzt wird. Oberhalb gemäß Figur 3 der rechteckförmig im Schnitt dargestellten Spule 14 ist ein Bereich ohne ein Magnetfeld-Leitelement gezeigt, wobei dieser Bereich ebenfalls durch das Material des Magnetfeld-Leitelements 15 ausgefüllt sein kann oder alternativ mit einem magnetisch isolierendem bzw. schwach leitfähigem Material gefüllt sein kann bzw. materialfrei bleiben kann. Zwischen einer Spulenwicklung (nicht im Detail gezeigt) außen an der Spule 14 und den angrenzenden Abschnitten des Magnetfeld-Leitelements 15 kann eine Isolationsschicht zur verbesserten elektrischen Isolation eingebracht sein bzw. die Spule umhüllen, z.B. mit einer Folie bzw. zumindest einem Schrumpfschlauch.

Insbesondere ist es von Vorteil, dass zwischen der Spule 14 und dem Magnetfeld-Leitelements 15 kein bzw. nahezu kein Abstand für eine eingegossene Isolationsschicht nötig ist.

Figur 4 zeigt perspektivisch schräg von unten den geschnittenen Teil einer zu Figur 3 ähnliche Ausgestaltung des Elektromagneten 13. Dabei sind umfänglich gleichmäßig beabstandet an dem Magnetfeld-Leitelement 15 versteifende Außenrippen 16 durch einen zusätzlichen Spritzvorgang am bereits zuvor durch Spritzgießen hergestellten Magnetfeld-Leitelements 15 zu erkennen. Außerdem sind weitere Elemente am Magnetfeld-Leitelement 15 durch einen weiteren Spritzgussvorgang angebracht, hier beispielsweise Kabelhalter 17 und 18.

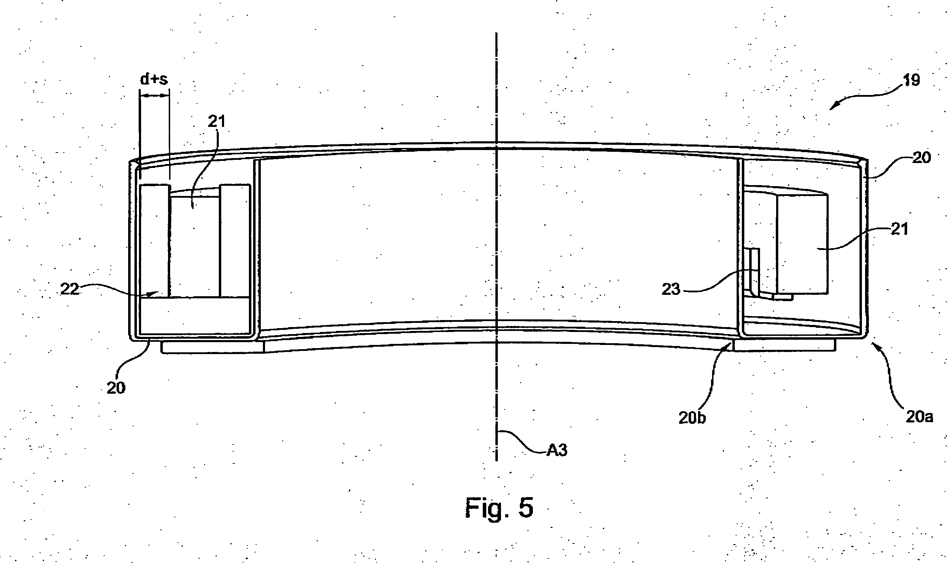

Figur 5 zeigt einen Elektromagneten 19 einer weiteren alternativen erfindungsgemäßen Anordnung. Der kreisförmige zu einer Mittelachse A3 ausgeformte Elektromagnet 19 umfasst einen vergleichsweise dünnwandigen Stahlkörper 20 aus einem umgeformten Blechmaterial. Mit dem dünnwandigen Stahlkörper 20 können vergleichsweise kleine Umformradien in Abknickbereichen 20a, 20b des Stahlkörpers 20 realisiert werden, wobei eine vergleichsweise sehr gute Bauraumausnutzung zur Unterbringung einer Spule 21 mit diesen umschließenden Magnetfeld-Leitmitteln möglich wird. Stark schematisiert dargestellt ist auf der linken Seite von Figur 5 im Zwischenbereich zwischen der Spule 21 und dem U-förmig ausgebildeten Stahlkörper 20 ein Magnetfeld-Leitelement 22 eingebracht, das in radialer Richtung beidseitig der Spule 21 eine Dicke d + s aufweist, was mit Bezug auf Figur 1, verdeutlicht, dass das hohe magnetische Leitvermögen des Magnetfeld-Leitelement 22 vergleichsweise über größere radiale Bereiche einbringbar ist. Das Einbringen des Magnetfeld-Leitelements 22 im Zwischenraum zwischen der Spule 21 und dem Stahlkörper 20 erfolgt insbesondere nach der Positionierung der Spule 21 zwischen den beiden Schenkeln des U-förmigen Stahlkörpers 20, insbesondere durch ein Spritzgussverfahren.

Auf der linken Seite von Figur 5 ist die Spule 21 ohne das Magnetfeld-Leitelements 22 gezeigt, wobei ein Halteteil 23 sichtbar ist, über welches die Spule 21 in dem Stahlkörper 20 positionsrichtig gehalten wird.

### Bezugszeichenliste:

- 1: Elektromagnet
- 2: Stahlkörper
- 3: Spulenkörper
- 4: Flanschring
- 5: Welle
- 6: Kugellageranordnung
- 7: Hülsenabschnitt
- 8: Elektromagnet
- 9: Magnetkörper
- 9a: Abschnitt
- 10: Spule
- 11: Zwischenbereich
- 12: Kugellager
- 13: Elektromagneten
- 14: Spule
- 15: Magnetfeld-Leitelement
- 15a: Innenwandung
- 15b: Außenwandung
- 16: Außenrippe
- 17: Kabelhalter
- 18: Kabelhalter
- 19: Elektromagnet
- 20: Stahlkörper
- 20a: Abknickbereich
- 20b: Abknickbereich
- 21: Spule
- 22: Magnetfeld-Leitelement
- 23: Halteteil

## Patentansprüche

1. Vorrichtung mit einem Elektromagneten (13, 19), bestehend aus einer Spule (14, 21) und Magnetfeld-Leitmittel (15, 22), welche die Spule (14, 21) zumindest teilweise umgeben, **dadurch gekennzeichnet, dass** die Spule (14, 21) mit einer gespritzten bzw. gegossenen Ummantelung versehen ist, welche Magnetfeld-Leitmittel (15, 22) bilden, wobei die Magnetfeld-Leitmittel (15, 22) aus einem Material gebildet sind, das ferromagnetische Metallpartikel und Kunststoffmaterial umfasst.

2. Vorrichtung nach dem Oberbegriff des Anspruchs 1, insbesondere nach Anspruch 1, **dadurch gekennzeichnet, dass** die Magnetfeld-Leitmittel (15, 22) aus einem auf der Basis von Metallpartikel hergestelltem Material mit ferromagnetischen Eigenschaften bestehen, das bei der Herstellung fließ- bzw. spritzfähig ist.

3. Vorrichtung nach einem der vorhergehenden Ansprüche, **dadurch gekennzeichnet, dass** die Magnetfeld-Leitmittel (15, 22) aus einem Material gebildet sind, das ferromagnetische Metallpartikel mit einem Anteil von über 80 Masseprozent insbesondere ca. 95 Masseprozent aufweist.

4. Vorrichtung nach einem der vorhergehenden Ansprüche, **dadurch gekennzeichnet, dass** die Magnetfeld-Leitmittel (15, 22) aus einem Material gebildet sind, das ein Kunststoffmaterial mit einem Anteil von bis zu 20 Masseprozent insbesondere ca. 5 Masseprozent aufweist.

5. Vorrichtung nach einem der vorhergehenden Ansprüche, **dadurch gekennzeichnet, dass** die Magnetfeld-Leitmittel (15) vollständig als Spritzgussbauteil ausgebildet sind.

6. Vorrichtung nach einem der vorhergehenden Ansprüche, **dadurch gekennzeichnet, dass** die Magnetfeld-Leitmittel ein Gehäuseteil umfassen, insbesondere ein umgeformter Stahlkörper (20).

7. Kupplung insbesondere für ein Kraftfahrzeug, die eine Vorrichtung nach einem der vorhergehenden Ansprüche aufweist.

8. Verfahren zur Herstellung eines Elektromagneten (13, 19) mit einer Spule (14, 21) und Magnetfeld-Leitmittel (15, 22), welche die Spule (14, 21) zumindest teilweise umgeben, **dadurch gekennzeichnet, dass** die Magnetfeld-Leitmittel (15, 22) mit einem Spritzgussvorgang ausgebildet werden.

9. Verfahren nach Anspruch 8, **dadurch gekennzeichnet, dass** die Magnetfeld-Leitmittel (15, 22) durch ein Umspritzen von zumindest Teilen der Spule (14, 21) ausgebildet werden.

10. Verfahren nach Anspruch 8 oder 9, **dadurch gekennzeichnet, dass** die Magnetfeld-Leitmittel (15, 22) aus einem auf der Basis von Metallpartikel hergestelltem Material mit ferromagnetischen Eigenschaften ausgebildet werden.

11. Verfahren nach einem der Ansprüche 8 bis 10, **dadurch gekennzeichnet, dass** die Spule (14, 21) in einem Bereich zwischen Abschnitten eines Gehäuseteils (20) der Magnetfeld-, Leitmittel eingebracht wird und anschließend spritzgussfähiges Material in Freiräume zwischen der Spule (14, 21) und den Abschnitten des Gehäuseteils eingebracht wird.
